# EUROPEAN PATENT SPECIFICATION

(11) **EP 1 765 662 B1**
(45) Date of publication and mention of the grant of the patent: **25.06.2014**
(21) Application number: 05737982.8
(22) Date of filing: 05.05.2005
(51) Int. Cl.: B60G 7/02, F16F 1/38, F16F 7/04, F16F 13/04, B62K 25/04, B60G 13/04, B60G 7/04, B60G 11/23

(54) **DAMPER APPARATUS**
DÄMPFVORRICHTUNG
APPAREIL AMORTISSEUR

(30) Priority: 28.05.2004 AU 2004902821
(43) Date of publication of application: 28.03.2007
(73) Proprietor: Rias Technologies (International) Limited, Perth, Western Australia 6000 (AU)
(72) Inventor: CONTARINO, Aldo, Woodvale, Western Australia 6026 (AU); VARRONE, Antonio, Leederville, Western Australia 6007 (AU)
(74) Representative: Stanners, David Ralph
(86) International application number: PCT/AU2005/000642
(87) International publication number: WO 2005/115825

(56) References cited:
- EP-A- 0 021 975
- EP-B1- 0 021 975
- DE-A1- 3 809 797
- GB-A- 2 343 731
- JP-A- 58 126 206
- US-A- 2 272 900
- US-A- 4 680 984
- US-A- 5 374 219
- US-A- 5 417 407
- US-A- 5 429 552
- US-A- 5 865 429
- US-A1- 2002 130 485
- US-A1- 2002 130 485
- US-A1- 2003 146 596

## Description

### Field of the Invention

The present invention relates to a damper apparatus. More particularly, the damper apparatus of the present invention is intended for use in a wide variety of applications where energy absorption and springs are applicable. Amongst many applications for the damper apparatus of the present invention is in the suspension systems provided on bicycles, cycles and like conveyances.

### Background Art

Various shock absorbing or suspension arrangements have been demonstrated previously, with application to bicycles in particular, utilising what is described as either a damper assembly, a torsional shock absorber or torsion spring arrangement. See in this regard the disclosure of each of US Patents 5975550 (Schonfeld), 6755432 (Muser) and US Patent Application Publication US 2001/0011806 A1 (Muser). Each of the arrangements described in these documents utilise an outer shell or housing and an inner shaft arranged to allow generally concentric relative rotation. A damper is disposed between the outer housing and inner shaft and is described as being provided from either a natural rubber, a synthetic rubber, other 'rubbery type substances', or polyurethane.

Unfortunately, these prior art devices have proven largely inadequate, with the damper material breaking down through shearing forces induced therein in use, or through the damper material being forced/extruded outwardly/laterally, or being caused to bulge, from its housing. This breakdown is thought to be attributable to several factors. One factor is the use of damper material that is press fitted into the outer housing or shell and press fitted about the inner shaft. The act of press-fitting places certain stresses on the damper material, for example shearing forces, and results in sideways or lateral extruding forces. Such an arrangement is disclosed in US 6755432. This arrangement also utilises teeth at the junctions between the damper material and both the outer housing or shell and the inner shaft. The relatively small teeth provides a small effective driving face and minimal purchase between the damper material and each of the outer housing or shell and the inner shaft. Consequently, there is little torque resistance and considerable extrusion of the damper material in use.

US 5975550 describes the rubber damper material as being bonded to both the outer housing or shell and the inner shaft. However, the document goes on to describe that a "key" or notch provided in the outer housing or shell which receives a portion of the rubber damper material "helps prevent slipping" between the outer housing or shell and the inner shaft. Again, the presence of the key introduces similar problems to those resulting from the toothed arrangement described in US 6755432. The smooth face of the inner shaft to which the damper material is bonded results in shearing forces in the damper material at that interface, where the area of interface between the damper material and the inner shaft is small, and again provides little torque resistance.

These prior art devices utilise an annulus or cylinder of damper material that is largely constant in thickness from inner shaft to outer housing. As such, torque/pressure is concentrated near the inner shaft during use.

Any effort to prevent the lateral extrusion of the damper material only serves to increase the negative aspects, of shearing forces and resultant fracturing of the damper material. There is a significant friction penalty associated with side containment seen in the response and return of the damper material. This is at least in part due to the Mullins effect that acts to impede full recovery of the damper material. The Mullins effect may also be referred to as stress softening.

The device described in US Patent 5975550 further has no mechanism by which the torsional damping is isolated. The damping material is consequently subject to forces acting radially relative to the axis of rotation of the damper. As such, the damping material is subject to compression-set in use, again inhibiting full functionality of the damper material.

US 5865429 describes an outer and inner member casing with a vibration proof member therebetween, which is connected such that it does not completely surround the inner member.

US 5 374 219 describes an outer and inner casing with a vibration proof member therebetween. There is no provision to limit the torque angle and, as such, a large torque angle is presented to the vibration proof member that increases shearing force and damage thereto.

No matter what the specific construction of prior art torsion shock absorbers or suspension arrangements, the damper material or active member exhibits inhibited recovery.

The damper apparatus of the present invention has as one object thereof to 5 overcome at least substantially the problems associated with the abovementioned prior art, or to at least provide a useful alternative thereto.

The preceding discussion of the background art is intended to facilitate an understanding of the present invention only. It should be appreciated that the discussion is not an acknowledgement or admission that any of the material 10 referred to was part of the common general knowledge in Australia as at the priority date of the application.

Throughout the specification, unless the context requires otherwise, the word "comprise" or variations such as "comprises" or "comprising", will be understood to imply the inclusion of a stated integer or group of integers but not the exclusion of 15 any other integer or group of integers.

### Disclosure of the Invention

In accordance with the present invention there is provided a damper apparatus according to claim 1.

Preferably, the damper material tapers in lateral thickness from the inner member toward the housing.

In a particularly preferred form of the present invention the housing is provided with a circular inner face to which the damper material is bonded.

It is expected that the housing and inner member will each have structures affixed thereto in use, whereby relative movement therebetween may be damped or absorbed. One readily apparent application being use as a torsion damper in the suspension systems for bicycles and similar conveyancers such as those described in US Patent 5975550 and US Patent Application Publication US 2001/0011905.

In accordance with the present invention there is further provided a conveyance having provided therein or thereon a suspension arrangement, the suspension arrangement comprising one or more torsion damper apparatus as described hereinabove.

### Brief Description of the Drawings

The damper apparatus of the present invention will now be described, by way of example only, with reference to one embodiment thereof and the accompanying drawings, in which:-
Figure 1 is a perspective view of a damper apparatus in accordance with the present invention, having particular application as a torsion damper;
Figure 2 is a side elevational view of the damper apparatus of Figure 1; and
Figure 3 is a cross-sectional end view of the damper apparatus of Figure 1.

### Best Mode(s) for Carrying Out the Invention

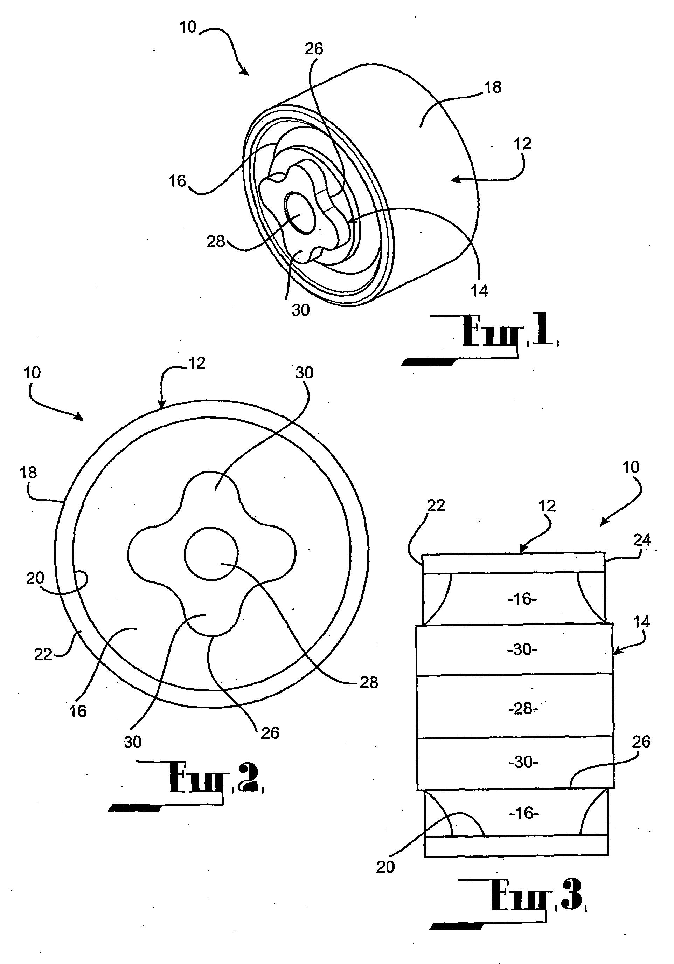

In Figures 1 to 3 there is shown a damper apparatus 10 adapted for use in torsion damping applications, the damper apparatus 10 comprising a first material, for example a housing 12 of generally circular configuration, a second material, for example an inner member 14, and a damper material 16 interposed therebetween. The housing 12 is provided with a radially disposed outer surface 18 and a radially disposed inner surface 20. The housing 12 further comprises a first lateral surface 22 and a second lateral surface 24. The damper material 16 is bonded directly to the inner surface 20 of the housing 12 and is further bonded to an outer surface 26 of the inner member 14. These bonding surfaces may be termed interfaces between the respective materials.

The inner member 14 has defined therein a transversely oriented inner core 28. The inner member 14 further comprises four(4) equally spaced radially extending lobes or projections 30. The radial projections 30 are rounded and extend transversely across the length of the inner member 14. The rounded nature of the projections 30 does not present a sharp or flat face to the bonded damper material 16, thereby presenting a minimal torque angle and reducing any potential for the introduction of shearing forces into the damper material 16 which might damage same.

As can be seen in Figure 3 the damper material 16 tapers from the inner member 14 to the inner face 20 of the housing 12.

In use, the outer housing 12 and the inner member 14 are attached to apparatus components, relative movement between which is to be dampened. As such, the housing 12 and inner member 14 are expected to rotate concentrically and relative to each other during use. This rotation is dampened through the action of the damper material 16 to which both the housing 12 and inner member 14 are bonded. This rotation can be achieved with relatively small shearing forces being induced in the damper material 16 and at minimal torque angle as a result of the the provision of the projections 30 on the inner member 14, each projection 30 being rounded or smooth in shape. As such, a torque angle approaching 0° is achieved at the interface between the inner member 14 and the damper material 16.

The provision of the projections 30 also acts to space apart from the inner core 28 the shearing forces induced by relative rotation between the housing 12 and inner member 14. These forces are more readily accepted or accommodated by the damper material 16 in such a position.

It is envisaged that the specific number and shape of the projections 30 from the inner member 14 may be varied by the user (not shown) to suit varying applications and tasks, although within the general constraints set out above of relatively small shearing forces being induced in the damper material at a minimal torque angle.

The tapering of the damper material 16 from the inner member 14 to the housing 12 acts to distribute torque throughout the damper material 16.

It is envisaged that either of the housing 12 or the inner member 14 may be fixed relative to the other in use.

The relative arrangement of the housing 12 and the inner member 14 allows highly variable indexing therebetween. Indexing of one component relative to the other is commonly utilised in suspension systems and is used to adjust or set the level of damping or shock absorbsion that is required by the user.

The minimisation or substantial reduction of shearing forces and sideways or lateral extrusion forces that plague prior art devices allows in large part an avoidance of stress relaxation or "compression set" in the damper material of the present invention. This factor often leads to the torsion springs of prior art devices becoming ineffective and requiring replacement.

For largely the same reasons as those noted immediately above, the torsion damper apparatus of the present invention is able to achieve very high levels of relative rotation between the housing 12 and the inner member 14. For example, in application as a torsion damper in the suspension system of a cycle, relative rotation of about 270° and greater has been achieved by the inventor. Such is not generally observed in prior art devices. It is to be understood that the degree of relative rotation is largely a product of the nature of the apparatus itself, including the physical constraints of the apparatus to which the housing 12 and inner member 14 are fixed or of which they form a part, and the radius of the damper material 16. The inventor envisages that relative rotation well beyond that described here is possible in appropriate applications. However, it is similarly to be understood that the apparatus of the present invention is, as a result of its unique construction, generally capable of a greater degree of relative rotation than is achieved by the prior art devices.

The apparatus 10 of the present invention also preferably operates with bushes or the like that act to isolate the damper material 16 from forces other than the rotational or torsional forces it is designed to accommodate. Such bushes or the like act to prevent damper material migration by maintaining the inner member 14 and housing 12 in largely fixed relation other than to accommodate the relative rotational movement of same.

It is envisaged that the damper material 16, at least, may be provided in the form of a polymeric material, including urethane. It is further envisaged that this material behaves in a manner typical of rheopectic materials. Rheopectic materials are understood to have a constant shear rate over time whilst exhibiting increasing viscosity.

It is further envisaged that the damper apparatus of the present invention has application as not only a torsional damper apparatus but in a wide variety of other circumstances in which movement of one material relative to another needs to be damped. For example, the linear respective movement of two bodies may be damped by way of the provision of damper material therebetween. In one form such may comprise a generally cylindrical first material or housing with a shaft extending therethrough in a generally 'coaxial' manner. The shaft is moveable axially through, and with respect to, the housing. A damper material may be provided between and bonded to the housing and the shaft, the surface of the shaft to which the damper material is bonded having provided thereon a series of rounded lobes constituting smooth circumferential ridges. These lobes or ridges presenting a limited torque angle and minimal shearing forces to the damper material.

As described above in respect of the damper apparatus 10, bearings or the like are preferably utilised to isolate the movement of the shaft through the housing and thereby avoid compression set and the Mullins effect in the damper material. In fact, however the damper apparatus of the present invention is utilised, in whatever arrangement, it is preferable that the relative movement between the two bodies that is to be damped is isolated in this manner.

It is still further envisaged that there are a wide variety of materials from which the first, second and damper materials may be provided. For example, each of these materials may be polymeric materials. In such an arrangement the first and second materials may be provided in a harder polymeric material than the damper material. In fact, the three materials may be the same material but provided as layers of differing hardness. Similarly, each of the materials may be metallic or composite materials. In each case it being a matter of the relative properties of the materials, the damper material needing to have the rheopectic properties as noted above. The use of such materials may allow particularly effective bonding between first, second and damper materials.

It is yet still further envisaged that there may be provided a number of layers within what is described above as the damper material. For example, materials with layers or regions of variable hardness may be utilised as either the damper material alone, or as the damper material and the mechanical equivalent of the housing and inner member.

The inner face of the housing may be provided in forms other than circular as described above. However, again, it is desirable to provide an interface between the damper material and housing that is of a limited torque angle.

## Claims

1. A damper apparatus (10) comprising a housing (12), an inner member (14) and a damper material (16) interposed therebetween, the damper material being bonded directly to a uniform circular inner surface of the housing and is further bonded to an outer surface of the inner member wherein at least one of the housing (12) and the inner member (14) is able to rotate or be rotated relative to the other in a substantially concentric manner, and the inner member (14) is provided in a form or configuration presenting a limited torque angle to the damper material (16) by being formed with two or more lobes (30) projecting from a centre thereof,
**characterised in that** the lobes (30) are rounded in general form so as to substantially minimise torque angle and shearing forces when the inner member (14) is rotated relative to the housing (12)..

2. The damper apparatus according to claim 1, wherein the damper material (16) tapers in lateral thickness from the inner member (14) toward the housing (12).

3. The damper apparatus according to claim 1 or 2, wherein the housing (12) and inner member (14) each have structures affixed thereto, whereby relative movement therebetween may be dampened or absorbed.

4. A conveyance having provided therein or thereon a suspension arrangement, the suspension arrangement comprising at least one damper apparatus (10) according to any one of claims 1 to 3.

## Patentansprüche

1. Dämpfungsvorrichtung (10), die Folgendes umfasst:
ein Gehäuse (12), ein Innenelement (14) und ein dazwischen befindliches Dämpfungsmaterial (16), wobei das Dämpfungsmaterial direkt auf eine gleichmäßige kreisförmige Innenfläche des Gehäuses geklebt und ferner auf eine Außenfläche des Innenelements geklebt ist, wobei das Gehäuse (12) und/oder das Innenelement (14) relativ zueinander auf eine im Wesentlichen konzentrische Weise drehen oder gedreht werden kann/können und das Innenelement (14) in einer solchen Form oder Konfiguration vorgesehen ist, dass das Dämpfungsmaterial (16) mit einem begrenzten Drehmomentwinkel beaufschlagt wird, da es mit zwei oder mehr Nocken (30) ausgebildet ist, die von seiner Mitte vorstehen,
**dadurch gekennzeichnet, dass** die Nocken (30) in einer allgemeinen Form gerundet sind, um Drehmomentwinkel und Scherkräfte erheblich zu minimieren, wenn das Innenelement (14) relativ zum Gehäuse (12) gedreht wird.

2. Dämpfungsvorrichtung nach Anspruch 1, wobei das Dämpfungsmaterial (16) in lateraler Dicke vom Innenelement (14) zum Gehäuse (12) konisch zuläuft.

3. Dämpfungsvorrichtung nach Anspruch 1 oder 2, wobei das Gehäuse (12) und das Innenelement (14) jeweils daran befestigte Strukturen haben, so dass eine relative Bewegung dazwischen gedämpft oder absorbiert werden kann.

4. Beförderungsmittel, in oder auf dem eine Federungsanordnung vorgesehen ist, wobei die Federungsanordnung wenigstens eine Dämpfungsvorrichtung (10) nach einem der Ansprüche 1 bis 3 umfasst.

## Revendications

1. Appareil d'amortissement (10) comprenant un carter (12), un élément interne (14) et un matériau d'amortissement (16) qui est intercalé entre ceux-ci, le matériau d'amortissement étant liaisonné directement sur une surface interne circulaire uniforme du carter, et étant liaisonné en outre sur une surface externe de l'élément interne, cas dans lequel au moins l'un des postes suivants, à savoir le carter (12) et l'élément interne (14), est apte à tourner, ou à être tourné, l'un par rapport à l'autre suivant une manière sensiblement concentrique, et l'élément interne (14) étant réalisé sous une forme ou une configuration présentant un angle de couple limité par rapport au matériau d'amortissement (16) du fait qu'il est constitué de deux lobes (30), ou davantage, qui font saillie à partir d'un centre de celui-ci,
**caractérisé en ce que** les lobes (30) sont arrondis, en forme générale, de sorte à minimiser sensiblement un angle de couple et des forces de cisaillement lorsque l'élément interne (14) est tourné par rapport au carter (12).

2. Appareil d'amortissement selon la revendication 1, le matériau d'amortissement (16) s'amincissant suivant une épaisseur latérale à partir de l'élément interne (14) jusqu'au carter (12).

3. Appareil d'amortissement selon la revendication 1 ou 2, le carter (12) et l'élément interne (14) possédant chacun des structures qui sont fixées sur ceux-ci, ce qui permet par conséquent d'amortir ou d'absorber tout mouvement relatif entre ces postes.

4. Moyen de transport dans lequel, ou sur lequel est prévu un agencement de suspension, l'agencement de suspension comprenant au moins un appareil d'amortissement (10) selon l'une quelconque des revendications 1 à 3.
